(19) Europäisches Patentamt
European Patent Office
Office européen des brevets

(11) **EP 2 379 755 B1**

(12) **EUROPÄISCHE PATENTSCHRIFT**

(45) Veröffentlichungstag und Bekanntmachung des Hinweises auf die Patenterteilung:
**13.02.2013 Patentblatt 2013/07**

(21) Anmeldenummer: **09809023.6**

(22) Anmeldetag: **17.12.2009**

(51) Int Cl.:
***C21C 5/30*** *(2006.01)*   ***C21C 5/32*** *(2006.01)*
***C21C 5/36*** *(2006.01)*

(86) Internationale Anmeldenummer:
**PCT/DE2009/001830**

(87) Internationale Veröffentlichungsnummer:
**WO 2010/075852 (08.07.2010 Gazette 2010/27)**

(54) **VERFAHREN ZUM ERZEUGEN VON STAHL IN EINEM SAUERSTOFFKONVERTER MIT DYNAMISIERTEN LANZENFAHRPLÄNEN**

METHOD FOR THE PRODUCTION OF STEEL IN AN OXYGEN CONVERTER USING DYNAMIZED BLOW PATTERNS

PROCÉDÉ DE PRODUCTION D'ACIER DANS UN CONVERTISSEUR À OXYGÈNE À L'AIDE DE MODÈLES D'INSUFFLATION DYNAMISÉS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.12.2008   DE 102008063796**

(43) Veröffentlichungstag der Anmeldung:
**26.10.2011   Patentblatt 2011/43**

(73) Patentinhaber: **SMS Siemag Aktiengesellschaft 40237 Düsseldorf (DE)**

(72) Erfinder: **GARTEN, Lutz 58332 Schwelm (DE)**

(74) Vertreter: **Klüppel, Walter Hemmerich & Kollegen Patentanwälte Hammerstraße 2 57072 Siegen (DE)**

(56) Entgegenhaltungen:
**EP-A1- 0 723 023**

• **CHATTERJEE A: "ON SOME ASPECTS OF SUPERSONIC JETS OF INTEREST IN LD STEELMAKING" IRON AND STEEL INTERNATIONAL, IPC SCIENCE AND TECHNOLOGY PRESS LTD. GUILDFORD, GB, 1. Februar 1973 (1973-02-01), Seiten 38-40, XP002001365**

**Beschreibung**

Die Erfindung betrifft ein Verfahren zum Erzeugen von Stahl mit niedrigem Phoshorgehalt in einem Sauerstoffkonverter, bei dem eine Roheisenschmelze durch mittels einer Sauerstofflanze auf den Badspiegel der Schmelze aufgegebenen technisch reinen Sauerstoff nach einem Lanzenfahrplan gefrischt wird.

Zum Erschmelzen von Stahl in einem Sauerstoffconverter oder ähnlichen Schmelzaggregat wird mittels einer Sauerstofflanze die Schmelze mit technisch reinem Sauerstoff gefrischt. Es werden über die gesamte Blaszeit verschiedene metallurgische Prozesse in folgender Reihenfolge verrichtet.

1) Entsilizierung des Roheisens unter Bildung von $SiO_2$
2) Bildung einer Reaktionsfähigen Schlacke mit einem hohen Kalklöslichkeitsgrad. (Verschlacken von Eisen zu FeO)
3) Entphosphorung
4) Entkohlung

Zum Erreichen der metallurgischen Ziele unter Gewährleistung einer hohen Prozesssiceheit wird hierfür eine klar definierte Lanzenhöhe über Badspiegel für einen klar definierten Sauerstoffdurchfluss angefahren. Die Lanzenhöhe Lx über Badspiegel wird durch die prozentuale Eindringtiefe des Sauerstoffstrahls Lo (Jetpenetration) zur Höhe des Stahlbades Lb definiert. Die Startbedingungen für Lo zu Blasbeginn liegen bei ca. 40% und zu Blasende für die Tiefstentkohlung bis zu 65%.

Lb = f( Schrott- und Roheisenmenge * Flüssigausbringen, Konverterinnengeometrie)
Lo = f(Lanzenkopfkonfiguration (Düsenwinkel, Düsendurchmesser, Anzahl der Düsen), Sauerstoffdurchfluss)
Lx = f(Lo/Lb)
Die Lanzenhöhe Lx wird stufenweise nach Erreichen einer prozentualen Teilsauerstoffmenge ($O_{\%1...x}$) zur benötigten Gesamtsauerstoffmenge ($O_{\Sigma}$) verringert.

Ist einmal ein optimales Blow Pattern für den Sauerstoff und Bodenspülung gefunden wird dieses meist über die gesamte Konverterreise benutzt.

Dies kann bei relativ stabilen Siliciumgehalten im Roheisen und stetiger Pflege des Feuerfestmaterials der Konverterausmauerung durch unterschiedliche Maßnahmen wie Torkretieren, Slag splashing, Absteifen der Restschlak-ke und Schwenken, Bodenpflege usw. durchaus auch möglich sein.

Beim Frischen von Roheisen von unterschiedlichen Hochöfen bei integrierten Hüttenwerken können die Siliciumwerte von 0,3 -1,8% von Schmelze zu Schmelze schwanken. Des weiteren kann es bei nicht optimierten Pflegemaßnahmen des Feuerfestmaterials zu erheblichen Schwankungen des Badspiegels (Lb) kommen.

Dies muss durch eine Dynamisierung des Blow pattern Rechnung getragen werden.

Aufgabe der Erfindung ist es, das Verfahren der eingangs genannten Art so zu optimieren, dass ein niedriger Phosphorgehalt im Stahl erreichbar ist unter Beibehaltung einer hohen Prozesssicherheit.

Gelöst wird diese Aufgabe erfindungsgemäß mit einem Verfahren zum Erzeugen von Stahl mit niedrigem Phoshorgehalt in einem Sauerstoffkonverter, bei dem eine Roheisenschmelze durch mittels einer Sauerstofflanze auf den Badspiegel der Schmelze aufgegebenen technisch reinen Sauerstoff nach einem Lanzenfahrplan gefrischt wird, das dadurch gekennzeichnet ist, dass für den Lanzenfahrplan die Lanzenhöhe über dem Badspiegel der Schmelze und die absolute Zeitdauer der eingeblasenen Teilsauerstoffmenge stufenweise in Abhängigkeit von dem Siliziumgehalt des eingesetzten Roheisens und der notwendigen Verschlackung von Si und Fe eingestellt wird.

Kern der Erfindung ist somit die Dynamisierung der Lanzenfahrpläne zum Erreichen niedriger Phosphorwerte.

Vorzugsweise Weiterbildungen ergeben sich aus den Unteransprüchen und werden nachfolgend erläutert.

Die Änderungen der Siliciumgehalte des Roheisens ($\%Si_{RE}$) von Schmelze zu Schmelze und des Badspiegels (Lb) über die Konverterreise (Lifetime BOF) müssen direkt auf den Blow Pattern dynamisch Einfluss nehmen, d.h.

1) Absolute Zeitdauer einer Teilsauerstoffmenge der einzelnen Stufen in Abhängigkeit vom Si-Gehalt des Roheisens ($0_{\%1...x}$) = f ($\%Si_{RE}$) und der notwendigen Zeitdauer für die Verschlackung von Si und Fe.
*("horizontale Dynamisierung")*

2) Lanzenhöhe über Badspiegel = f (aktuellen Badhöhe Lb) bei x% Jetpenetration = const. (Bei neu zugestellten BOF's ist der Badspiegel über dem Konverterboden mit der Badhöhe identisch! Dies ändert sich mit zunehmenden Feuerfestverschleiß im Wandbereich des Konverters)
*("vertikale Dynamisierung")*

1) Schwankungen der Kohlenstoff- und Siliciumgehalte im Roheisen können bis jetzt nur relativ die absolute Zeitdauer einer Teilsauerstoffmenge ($O_{\%1...x}$) der Stufen im Blow Pattern (Lanzenfahrplan) verlängern oder verkürzen, je nachdem welche Gesamtsauerstoffmenge entsprechend (Gleichung 1) benötigt wird. Diese relative Änderung ist jedoch nicht immer für eine optimale Prozessführung ausreichend, da sich der Kohlenstoffgehalt nicht linear proportional zum Siliciumgehalt des Roheisens verändert und in Abhängigkeit vom Siliciumgehalt der Roheisens (%Si$_{RE}$) und der chargierten Roheisenmenge die notwendige Kalkmenge definiert wird. Diese wird über eine Konstante, der Schlackenbasizität (B) von 3,0 ... 3,5 errechnet und ist somit klar definiert.

$$\text{Gesamtsauerstoffmenge (O}_\Sigma) = f(\ mC_{RE+Schrott}, mSi_{RE+Schrott}, mMn_{RE+Schrott},$$

$$mP_{RE+Schrott} \dots\ ) \qquad\qquad (1)$$

- mC$_{RE+Schrott}$ = Masse Kohlenstoff aus chargierten Roheisen und Schrott, entsprechend: Si = Silizium, Mn = Mangan, P = Phosphor [kg]

Der C - Gehalt des Roheisens hat zwar über die notwendige Gesamtsauerstoffmenge Einfluss auf den Blow Pattern, jedoch keinen Einfuß auf die optimale Schlackenbildung. Deshalb muss dem Einfluss des Siliziumgehaltes im Roheisen auf eine optimale Prozessführung mehr Beachtung geschenkt werden.

Der Kern der Erfindung besteht in der dynamischen Änderung der Teilsauerstoffmengen der ersten Stufen des Lanzenfahrplanes oder Blow Pattern (40 - 55 % Jetpenetration) in Abhängigkeit von der Siliziummenge (Gleichung 2) mittels der Errechnung der stoichiometrisch mindestens notwendigen Sauerstoffmengen zum vollständigen Verschlaken von Silizium (mO $_{Si \to SiO2}$) und der für eine maximale Kalklöslichkeit in der Schlacke benötigte Sauerstoffmenge ( mO $_{Fe \to FeO}$) zur Teilverschlackung von Eisen zu FeO. (Gleichungen 3 und 4)

$$mSi_{RE+Schrott} = (\%Si_{RE} * m_{RE}) + (\%Si_{Schrott} * m_{Schrott}) \qquad\qquad (2)$$

- %S$_{iRE}$ = Prozentualer Siliziumgehalt im Roheisen,
- m$_{RE}$ = Menge des chargierten Roheisens [t]
- %Si$_{Schrott}$ = durchschnittlicher prozentualer Siliziumgehalt im Schrott
- m$_{Schrott}$ = chargierte Schrottmenge [t]

$$(\text{mO}_{Si \to SiO2}) = 0{,}7967 * mSi_{RE+Schrott} \qquad [Nm^3] \qquad\qquad (3)$$

$$(\text{mO}_{Fe \to FeO}) = 0{,}579 * \text{mO}_{Si \to SiO2} \qquad [Nm^3] \qquad\qquad (4)$$

Die entsprechend (4) benötigte Sauerstoffmenge für die Eisenverschlackung ist für den Fall des Erreichens einer definierten metallurgisch üblichen Schlackenbasizität anzuwenden.

Für den Fall der Prozessführung nach Kalklinie "A", insbesondere bei A=70, wird die notwendige Sauerstoffmenge zur Eisenverschlacküng aus dem Verhältnis (SiO$_2$)' und (FexO)' entsprechend der Kalklinie im Dreistoffsystem errechnet, dabei gilt:

$$\text{mO Fe->FeO} = 0{,}418 * (\%FeO)'/(\% SiO_2)'* \text{ mO Si->SiO}_2 \qquad\qquad (4a)$$

Die benötigte Sauerstoffmenge zum Entsilizieren bleibt wie in (3).

Die in Tabelle 1 dargestellte Berechnung soll darstellen, welche Sauerstoffmengen bei einer Roheisenmenge von 180 t für die Entsilizierung und einer für eine optimale Kalklösung notwendigen Eisenverschlackung bei unterschiedlichen Siliziumgehalten im Roheisen mindestens notwendig sind. (35 t Schrott mit 0 0,3 % Si)

| %Si$_{RE}$ | 0,3 | 0,6 | 0,9 | 1,2 |
|---|---|---|---|---|
| mO $_{Si \to SiO2}$ [Nm$^3$] | 513,9 | 944,1 | 1374,4 | 1804,6 |
| mO $_{Fe \to FeO}$ [Nm$^3$] | 297, 5 | 546,6 | 795, 7 | 1044,8 |
| MO $_{Schlackebildung}$ | 811,4 | 1490,7 | 2170,1 | 2849,4 |
| Zeitdauer für Schlackebildung bei 760 Nm$^3$O$_2$ / min, in [min] | 1,07 | 1,96 | 2,86 | 3,75 |

Sauerstoffmengen für die Verschlackung von Mn und P werden hier nicht berücksichtigt. Der Siliciumgehalt im Roheisen bestimmt die notwendige Zeit für eine optimale Schlackenbildung in den ersten Blasminuten eines Sauerstoffkonverters. Bis zum Abschluss der Siliziumverschlackung wird die Entkohlungsreaktion nicht angestoßen, d.h. in der Zeit findet auch keine CO-Gas-Erzeugung statt. Die angefahrene Lanzenhöhe muss dem derart Rechnung tragen, dass die Zeitdauer der ersten Stufen für eine Jetpenetration von 40%, bzw. 48% innerhalb des vorgegebenen Blow Pattern prozentual auf die notwendige Gesamtsauerstoffmenge dem für die Si- und Fe- Verschlackung mindestens notwendigen Sauerstoffmengen ange-passt wird. Da die für den Konverterprozess notwendige Kalkmenge vom Siliziumgehalt im Roheisen auch proportional abhängig ist, wird durch die Dynamisierung der Stufen des Blow Pattern eine optimale Kalklöslichkeit zu Prozessbeginn gewährleistet.

Gleichzeitig wird vorgeschlagen, die Förderleistung der Kalkzugabesysteme des Konverters dem dynamisierten Blow Pattern angepasst werden. D.h. die Zugabe der notwendigen Kalkmenge in den Konverter muss abgeschlossen sein, bevor die Lanze eine Position für die Tiefstentkohlung (Jetpentetration 60-65%) anfährt. Damit soll eine optimale Entphosphorung bei gleichzeitiger Prozesssicherheit erreicht werden. Dies kann dynamisch erfolgen oder durch die Wahl einer mind. notwendigen Förderleistung, welche sicherstellt, dass die gesamte Kalkmenge vor Anfahren der o. g. Lanzenposition über Stahlbad für die Tiefstentkohtung in den Konverter gefördert wurde.

2) Über die Konverterreise (Lifetime) verschleißt die feuerfeste Ausmauerung eines Konverters und die Badhöhe wird zunehmend flacher, d.h. der Badspiegel verringert sich mit der Anzahl der erzeugten Schmelzen. Um einen gleich bleibenden Lanzenabstand zum Bad zu gewährleisten, wird nach jeder Badspiegelmessung im System (meist Level 1) über den Encoder der Lanzenposition die anzufahrende Lanzenhöhe über dem Badspiegel korrigiert. Dies ist allgemeine Stahlwerkspraxis.

Der Kern des Verfahrens besteht somit auch darin, dass nicht die absolute Lanzenhöhe über Bad einen sicheren Prozess garantiert, sondern die Stufen über das Verhältnis der absolute Eindringtiefe (Lo) des Sauerstoffstahls zur Badhöhe (Lb) definiert werden muss, d.h. bei absinkender Badhöhe über die Konverterreise, muss der Lanzenabstand (Lx) zum Bad steigen, um das prozentuale Verhältnis Jetpenetration=(Lo/Lb)=const. zu garantieren.

Tabelle 2 zeigt als Fallbeispiel 1 die Änderung der Jetpenetration über die Konverterreise bei absinkenden Badspiegel = Badhöhe. (100% Wandverschleiß, kein Bodenverschleiß) In diesem Fall würde der Konverter mit zunehmenden Verschleiß und sich verringerten Badspiegel immer härter blasen, obwohl die absolute Lanzenhöhe über Stahlbad gleich bleibt.

| Gemessener Badspiegel [mm] | 1610 | 1550 | 1500 | 1400 | 1350 | Lanzenabstand zum Bad [mm]: Lx = const. |
|---|---|---|---|---|---|---|
| Jetpenetration [%] zu Blasbeginn: | 40 | 41,56 | 42,94 | 46,01 | 47,71 | 3483 |
| Jetpenetration [%] zu Beginn der Entkohlung: | 55 | 57,12 | 59,03 | 63,24 | 65,59 | 2583 |
| Jetpenetration [%] zur Hauptentkohlung: | 65 | 67,52 | (69, 77) | (74, 75) | (77, 52) | 2110 |

Im Extremfall kann es bei einer prozentualen Eindringtiefe des Sauerstoffstrahls in das Stahlbad von über 70% zu massiven Auswaschungen im Bodenbereich kommen. Dies führt nicht nur zu erhöhten Pflegemaßnahmen, sondern kann im Extremfall zu einer massiven Anlagengefährdung führen. Des weiteren würden die notwendigen Phosphorwerte zu Blasende immer schwieriger erreicht werden.

Tablette 3 zeigt die zum Patent vorgeschlagene "vertikale Dynamisierung" des Lanzenfahrplans (Blow Pattern) durch das Anpassen der angefahrenen Lanzenhöhen auf den sich über die Konverterreise absinkenden Badspiegel = Badhöhe.

| Gemessener Badspiegel [mm] | 1610 | 1550 | 1500 | 1400 | 1350 | Jetpenetration, [%]: Lo/Lb = const. |
|---|---|---|---|---|---|---|
| Lanzenhöhe über Bad zu Blasbeginn [mm]: | 3483 | 3590 | 3684 | (3879) | (3982) | 40 |
| Lanzenhöhe über Bad zu Beginn der Entkohlung [mm]: | 2583 | 2690 | 2783 | 2978 | 3081 | 55 |
| Lanzenhöhe über Bad zur Hauptentkohlung [mm]: | 2110 | 2218 | 2310 | 2505 | 2608 | 65 |

Mit zunehmenden Verschleiß des FF-Futters und Absinken des Badspiegels muss die Lanzenhöhe nach oben korrigiert werden, um eine konstante Jetpentetration zu garantieren. Jedoch wird dies für den Blasbeginn mit absinkendem Badspiegel immer schwieriger, da die Lanze den zylindrischen Teil des Konverters nicht verlassen sollte. Durch Verringerung des Sauerstoffdurchflusses nur für die erste Stufe (40% Jet-Penetration) von 760 auf 700 Nm$^3$/min kann man die notwendige Lanzenhöhe von 3982 mm auf 3622 mm verringern.

Für das Fallbeispiel 2 (100 % Bodenverschleiß und kein Wandverschleiß) kann in erster Nährung für die Badhöhe Lb der Badspiegel = Badhöhe eines neu zugestellten Konverters angenommen werden (ISDEMIR für 200 t = 1610 mm). D.h. der Badspiegel würde sich für dieses Fallbeispiel nur vertikal zum Hüttenflur verringern und wenig Einfuß auf die Stahlhöhe nehmen.

In der Konverterpraxis gibt es sowohl einen Boden- und Wandverschleiß der feuerfesten Zustellung. Interessant ist hierbei der Einfluss des Wandverschleißes auf die geringer werdende Badhöhe. Durch verschiedene Pflegemaßnahmen im Wandbereich kann dieser Einfluss schwanken und kann bei annährend gleich bleibenden Bodenverschleiß, nach erfolgter Pflegmaßnahme zu einem höheren gemessenen Badspiegel führen. Insgesamt über die Konverterreise wurde der Einfluss des Wandverschleißes von ca. 24% zur Änderung Badspiegels gefunden.

Um praxisnahe vertikal dynamisierte Lanzenfahrpläne über die gesamte Konverter-reise zu berechnen wurde zum Fallbeispiel 2 in Tabelle 2 ein Korrektorfaktor von 0,24 zum Badspiegel eingeführt, welcher die Badhöhe Lb (cal.) näherungsweise darstellen kann (s. Gleichung 5). Die Resultate sind in Tabelle 3 dargestellt.

$$Lb_{(cal)} = BS_{new\,ref.} - (BS_{new\,ref.} - BS_{actuell})*0,24 \qquad (5)$$

- BS $_{new\,ref.}$ = Badspiegel eines neu zugestellten Konverters
- BS $_{actuell}$ = aktuell gemessener Badspiegel

| Gemessener Badspiegel [mm] | 1610 | 1550 | 1500 | 1400 | 1350 | Jetpenetration, [%]: Lo/Lb = const. |
|---|---|---|---|---|---|---|
| Kalkulierte Badhöhe [mm] | 1610 | 1595,6 | 1583,6 | 1559,6 | 1547,6 | |
| Lanzenhöhe über Bad zu Blasbeginn [mm]: | 3483 | 3509 | 3530 | 3573 | 3595 | 40 |
| Lanzenhöhe über Bad zu Beginn der Entkohlung | 2583 | 2608 | 2630 | 2673 | 2695 | 55 |
| Lanzenhöhe über Bad zur Hauptentkohlung [mm]: | 2110 | 2135 | 2157 | 2200 | 2222 | 65 |

Gleichung 5 gilt nur für den Fall: BS $_{new\,ret.}$ - BS $_{actuell}$ >= 0 Im Falle, dass der aktuell gemessene Badspiegel höher als der eines neu zugestellten Konverters ist, wurde die Badhöhe dem Badspiegel eines neu zugestellten Konverters gleichgesetzt. In diesen Fall handelt es sich in Praxis meist um einen Aufbau des Bades mit Beeinträchtigung der Effektivität der Bodenspülung.

Die Werte wurden für einen 200 t BOF bei einer Sauerstoffdurchflussmenge von 760 Nm$^3$ / min für die Lanze gerechnet und erprobt.

Für die horizontale Dynamisierung wurden verschiedene Blow Pattern in Abhängigkeit vom Siliciumgehalt des Roheisens erstellt und genutzt.

(Pattern 1 - 3). Die vertikalen Dynamisierung wurde berücksichtigt, indem nach ca. 1500 Chargen und dem trotz Pflegemaßnahmen erreichten Badspiegel von 1350 mm der für einen mittleren Si-Gehalt von 0,6% +-0,2% errechnete Blow Pattern Nr. 1 um ca. 11 cm korrigiert wurde.

Bei korisequenter Fahrweise, wurden niedrige Phosphorwerte zu Blasende bei gleichzeitiger Gewährleistung der Prozesssicherheit (kein slopping) erreicht.

Eine Dynamisierung über das Prozessmodell lässt wesentlich genauere Werte, basierend auf den aktuellen Ausgangswerten erwarten, die im Blow Pattern der aktuellen Schmelze einfließen müssen. Für jede Schmelze sollte in Abhängigkeit von den Roheisendaten und dem aktuellen Badspiegel und Konverteralter (Lifetime) unter Berücksichtigung der Qualitätsanforderung (Bodenspülung N2 oder Ar) ein individueller dynamisierter Blow Pattern mit entsprechenden Plausibilitätsabfragen errechnet werden. Dies ist besonders für Konverter mit Abgasnutzung von großem Vorteil.

**Patentansprüche**

1. Verfahren zum Erzeugen von Stahl mit niedrigem Phoshorgehalt in einem Sauerstoffkonverter, bei dem eine Roheisenschmelze durch mittels einer Sauerstofflanze auf den Badspiegel der Schmelze aufgegebenen technisch reinen Sauerstoff nach einem Lanzenfahrplan gefrischt wird, wobei

   für den Lanzenfahrplan die Lanzenhöhe über dem Badspiegel der Schmelze und die absolute Zeitdauer der eingeblasenen Teilsauerstoffmenge stufenweise in Abhängigkeit von dem Siliziumgehalt des eingesetzten Roheisens und der notwendigen Verschlackung von Si und Fe eingestellt wird, wobei

   für den Lanzenfahrplan die Lanzenhöhe (Lx) über dem Badspiegel aus der prozentualen Eindringtiefe des Sauerstoffstrahles (Lo) bezogen auf die Badhöhe der Schmelze (Lb) bestimmt wird, wobei Lx= f(Lo/Lb)=const. gilt und wobei

   sich die Gesamtsauerstoffmenge ($O_\Sigma$) ergibt aus

$$f( mC_{RE+Schrott}, mSi_{RE+Schrott}, mMn_{RE+Schrott}, mP_{RE+Schrott} \dots )$$

   wobei $mC_{RE+Schrott}$ = Masse Kohlenstoff aus chargierten Roheisen und Schrott, entsprechend: Si = Silizium, Mn = Mangan, P = Phosphor [kg] ist und wobei eine dynamischen Änderung der Teilsauerstoffmengen der ersten Stufen des Lanzenfahrplanes mit einer Eindringtiefe (Lo) von 40-55% in Abhängigkeit von der Siliziummenge mittels der Errechnung der stoichiometrisch mindestens notwendigen Sauerstoffmengen zum vollständigen Verschlacken von Silizium und der für eine maximale Kalklöslichkeit in der Schlacke benötigte Sauerstoffmenge zur Teilverschlackung von Eisen zu FeO erfolgt, wobei

   sich die Siliziummenge ergibt aus

$$mSi_{RE+Schrott} = (\%Si_{RE} * m_{RE}) + (\%Si_{Schrott} * m_{Schrott})$$

   mit

   - $\%Si_{RE}$ = Prozentualer Siliziumgehalt im Roheisen,
   - $m_{RE}$ = Menge des chargierten Roheisens [t]
   - $\%Si_{Schrott}$ = durchschnittlicher prozentualer Siliziumgehalt im Schrott
   - $m_{Schrott}$ = chargierte Schrottmenge [t],

   die Sauerstoffmenge zum Verschlacken von Silizium sich ergibt nach:

$$( mO_{Si \rightarrow SiO2} ) = 0,7967 * mSi_{RE+Schrott} \qquad [Nm^3]$$

und

die für die maximale Kalklöslichkeit in der Schlacke benötigte Sauerstoffmenge aus

$$( mO_{Fe \rightarrow FeO} ) = 0{,}579 * mO_{Si \rightarrow SiO_2} \qquad [Nm^3].$$

**2.** Verfahren nach Anspruch 1,
**dadurch gekennzeichnet,**
**dass** sich die Badhöhe ergibt aus

$$Lb_{(cal)} = BS_{new\ ref.} - (BS_{new\ ref.} - BS_{actuell}) * 0{,}24$$

mit

- $BS_{new\ ref.}$ = Badspiegel eines neu zugestellten Konverters
- $BS_{actuell}$ = aktuell gemessener Badspiegel.

**3.** Verfahren nach einem der vorstehenden Ansprüche,
**dadurch gekennzeichnet,**
**dass** die Förderleistung der Kalkzugabesysteme des Konverters dem dynamisierten Blow Pattern angepasst wird, wobei die Zugabe der notwendigen Kalkmenge in den Konverter abgeschlossen ist, bevor die Lanze eine Position für die Tiefstentkohlung (Jetpentetration 60-65%) anfährt.

**4.** Verfahren nach einem der vorstehenden Ansprüche,
**dadurch gekennzeichnet,**
**dass** zur Erreichung einer gezielten Schlackenbasizität oder für die Schlackenführung nach Kalklinie die Dynamisierung der ersten Stufe im Lanzenfahrplan in Abhängigkeit von der Gesamtsiliciummenge im Konverter erfolgt.

**5.** Verfahren nach einem der vorstehenden Ansprüche,
**dadurch gekennzeichnet,**
**dass** für eine Prozessführung nach Kalklinie "A", insbesondere bei A=70,die notwendige Sauerstoffmenge zur Eisenverschlackung aus dem Verhältnis $(SiO_2)'$ und (FexO)' entsprechend der Kalklinie im Dreistoffsystem errechnet wird, dabei gilt:

$$mO\ Fe\text{->}FeO = 0{,}418 * (\%FeO)'/ (\%\ SiO_2)'* \ mO\ Si\text{->}SiO_2 \qquad (4a)$$

## Claims

**1.** Method for producing steel with low phosphor content in an oxygen converter, in which a pig iron smelt is oxidised by technically pure oxygen, which is supplied by means of an oxygen lance to the bath meniscus of the smelt, in accordance with a lance travel plan, wherein for the lance travel plan the lance height above the bath meniscus of the smelt and the absolute duration of the injected part quantity of oxygen is set in steps in dependence on the silicon content of the pig iron used and the required slagging of Si and Fe, wherein for the lance travel plan the lance height (Lx) above the bath meniscus is determined from the percentage depth of penetration of the oxygen jet (Lo) referred to the bath height of the smelt (Lb), wherein $Lx = f(Lo/Lb) = const.$, and wherein the total oxygen quantity $(O_{\Sigma})$ results from

$$f(Mc_{PI+scrap}, mSi_{PI+scrap}, mMn_{PI+scrap}, Mp_{PI+scrap} \ldots),$$

wherein $MC_{PI+scrap}$ = mass of carbon from the charged pig iron and scrap and correspondingly Si = silicon, Mn = manganese, P = phosphorous [kg], and wherein a dynamic change in the oxygen part quantities of the first steps of the lance travel plan with a penetration depth (Lo) of 40 - 55% depending on the silicon quantity is carried out by means of calculation of the at least stoichiometrically necessary oxygen quantities for complete slagging of silicon and of the oxygen quantity, which is required for a maximum lime solubility in the slag, for partial slagging of iron to form FeO, wherein the silicon quantity results from $mSi_{PI+scrap} = (\%Si_{PI} * m_{PI}) + (\%Si_{scrap} * m_{scrap})$, in which

- $\%Si_{PI}$ = percentage silicon content in the pig iron,
- $m_{PI}$ = quantity of charged pig iron [tonnes],
- $\%Si_{scrap}$ = average percentage silicon content in the scrap and
- $m_{scrap}$ = charged scrap quantity [tonnes],

the oxygen quantity results from slagging of silicon according to:

$$(mO_{Si}\Delta_{SiO2}) = 0.7967 * mSi_{PI+scrap} \qquad [Nm^3]$$

and
the oxygen quantity needed for maximum lime solubility in the slag results from

$$(mO_{Fe}\Delta_{FeO}) = 0.579 * mO_{Si}\Delta_{SiO2} \qquad [Nm^3].$$

**2.** Method according to claim 1, **characterised in that** the bath height results from

$$Lb_{(cal)} = BS_{new\ ref.} - (BS_{new\ ref.} - BS_{current}) * 0.24,$$

wherein

- $BS_{new\ ref.}$ = bath meniscus of a newly delivered converter
- $BS_{current}$ = currently measured bath meniscus.

**3.** Method according to one of the preceding claims, **characterised in that** the conveying performance of the lime addition system of the converter is matched to the dynamic blow pattern, wherein the addition of the necessary lime quantity to the converter is concluded before the lance travels to a position for the deepest carburisation (jet penetration 60 - 65%).

**4.** Method according to any one of the preceding claims, **characterised in that** in order to achieve a desired slag basicity or for slag control according to the lime line, dynamisation of the first step in the lance travel plan is carried out in dependence on the total silicon quantity in the converter.

**5.** Method according to any one of the preceding claims, **characterised in that** for process control according to the lime line 'A', particularly when A = 70, the necessary oxygen quantity for iron slagging is calculated from the ratio of $(SiO_2)'$ and $(FexO)'$ in correspondence with the lime line in the ternary system, in which case:

mO Fe->FeO = 0.418* $(\%FeO)'$ / $(\%SiO_2)'$* mO Si->$SiO_2$.

**Revendications**

**1.** Procédé de production d'acier présentant une faible teneur en phosphore dans un convertisseur à oxygène, dans lequel une masse en fusion de fonte brute est affinée à l'oxygène techniquement pur délivré au moyen d'une lance à oxygène à la surface du bain de la masse en fusion selon un modèle d'insufflation, où
pour le parcours de la lance, la hauteur de la lance au-dessus de la surface du bain de la masse en fusion et la durée absolue pendant laquelle une quantité partielle d'oxygène est insufflée, sont ajustées progressivement en fonction de la teneur en silicium de la fonte brute utilisée et de la scorification nécessaire de Si et de Fe, où
pour le parcours de la lance, la hauteur de la lance (Lx) au-dessus de la surface du bain est déterminée à partir de la profondeur de pénétration, en pourcent, du jet d'oxygène (Lo) par rapport à la hauteur du bain de la masse en fusion (Lb), Lx = f(Lo/Lb) = constante et où

la quantité totale d'oxygène ($O_\Sigma$) est obtenue par

$$f(mC_{FB+ferraille}, MSi_{FB+ferraille}, mMn_{FB+ferraille}, mP_{FB+ferraille}\ldots)$$

où $mC_{FB+Ferraille}$ = masse de carbone de la fonte brute chargée et des ferrailles chargées, et conformément : Si = silicium, Mn = manganèse, P = phosphore [kg] et une modification dynamique des quantités partielles d'oxygène des premières étapes du parcours de la lance d'une profondeur de pénétration (Lo) de 40-55% étant réalisée en fonction de la quantité de silicium au moyen du calcul des quantités d'oxygène au moins stoechiométriquement nécessaires pour la scorification totale du silicium et de la quantité d'oxygène nécessaire pour une solubilité maximale de la chaux dans les scories pour la scorification partielle de fer en FeO, la quantité de silicium étant obtenue par

$$mSi_{FB+Ferraille} = (\%Si_{FB} * m_{FB}) + (\%Si_{Ferraille} * M_{Ferraille})$$

où
$\%Si_{FR}$ = teneur en pourcent en silicium dans la fonte brute,
$m_{FB}$ = quantité de fonte brute chargée [t]
$\%Si_{Ferraille}$ = teneur moyenne en pourcent de silicium dans la ferraille $m_{Ferraille}$ = quantité de ferraille chargée [t],
la quantité d'oxygène pour la scorification en silicium étant obtenue par :

$$(mO_{Si \to SiO2}) = 0{,}7967 * mSi_{FB+Ferraille} [Nm^3]$$

et
la quantité d'oxygène nécessaire pour la solubilité maximale de chaux dans les scories étant obtenue par

$$(mO_{Fe \to FeO}) = 0{,}579 * mO_{Si \to SiO2} [Nm^3].$$

2. Procédé selon la revendication 1, **caractérisé en ce que** la hauteur du bain est obtenue par

$$Lb_{(Calc)} = BS_{new\ ref.} - (BS_{new\ ref.} - BS_{actuel}) * 0{,}24$$

où
$BS_{new\ ref.}$ = niveau du bain d'un convertisseur nouvellement exploité $BS_{actuel}$ = niveau actuel mesuré du bain.

3. Procédé selon l'une quelconque des revendications précédentes, **caractérisé en ce que** la puissance de débit du système d'addition de chaux du convertisseur est adaptée au modèle d'insufflation (Blow Pattern) dynamisé, l'addition de la quantité nécessaire de chaux dans le convertisseur étant terminée avant que la lance ne se place dans une position pour la décarburation profonde (pénétration du jet 60-65%).

4. Procédé selon l'une quelconque des revendications précédentes, **caractérisé en ce que** pour atteindre une basicité ciblée des scories ou pour la conduite des scories selon la ligne de chaux, la dynamisation de la première étape dans le parcours de la lance est réalisée en fonction de la quantité totale de silicium dans le convertisseur.

5. Procédé selon l'une quelconque des revendications précédentes, **caractérisé en ce que** pour une conduite du procédé selon la ligne de chaux "A", en particulier à A = 70, la quantité nécessaire d'oxygène pour la scorification du fer est calculée à partir du rapport $(SiO_2)'$ et $(FexO)'$ selon la ligne de chaux dans le système à trois substances, avec :

$$mO\ Fe \to FeO = 0{,}418 * (\%FeO)' / (\%SiO_2)' * mO\ Si \to SiO_2 \ (4a)$$